# EUROPEAN PATENT APPLICATION

(11) **EP 2 202 199 A1**
(43) Date of publication of application: **30.06.2010**
(21) Application number: 09180348.6
(22) Date of filing: 22.12.2009
(51) Int. Cl.: C01B 13/11

(54) **Device for the generation of ozone**

(30) Priority: 23.12.2008 IT MI20082308
(71) Applicant: Molinari, Giuseppe, 47039 Savignano Sul Rubicone (IT); Silvagni, Filiberto, 47039 Savignano Sul Rubicone (IT); Molinari, Claudio, 47039 Savignano Sul Rubicone (IT)
(72) Inventor: Molinari, Giuseppe, 47039 Savignano Sul Rubicone (IT); Silvagni, Filiberto, 47039 Savignano Sul Rubicone (IT); Molinari, Claudio, 47039 Savignano Sul Rubicone (IT)
(74) Representative: Borsano, Corrado

(57) **Abstract**

A generator device (DG) for producing ozone, comprising at least a tube (23) made of dielectric material, inside which air coming from the outside through vents (25) is adapted to circulate, and a cylindrical mesh (26) arranged inside said tube (23) and electrically connected; the device comprises a second cylindrical mesh (27) electrically connected and arranged coaxially and outside said tube (23).

## Description

The present invention relates to a generator device for producing ozone.

In particular, the present invention can be advantageously used in purification treatments of air in working environments with high concentrations of polluting gases and odours, such as industrial processing areas or areas used for cooking food in the kitchens of hotels, restaurants, bars and the like, and air conditioning systems to which the description below explicitly refers without loss of generality. Currently, devices are known for producing ozone (O₃) through the use of air-oxygen oxidizing agents, which generally comprise an element suitable to cause a high voltage electric discharge to generate the transformation of oxygen (02) into ozone (03) inside a cylinder or tube made of dielectric material, such as glass or ceramic material.

However, this method, called "simple corona", has some drawbacks.

In fact, ozone production depends closely on the diameter of the dielectric cylinder, and therefore it is not possible to produce large quantities of ozone without having cylinders of large diameters and consequently large dimensions. Moreover, as the production of ozone also depends on the speed of the oxygen flow passing through the aforesaid cylinder, current devices must include fans adapted to force substantial volumes of air into the cylinder, or compressors adapted to feed compressed air into the cylinder with the *Venturi tube effect.*

As a consequence, as compressed air can contain viruses, bacteria or other polluting agents often coming from the compressor that generated the compressed air, it must necessarily be purified by the ozone produced, without therefore being able to check the effective quantity thereof.

The object of the present invention is to overcome the drawbacks described above.

In particular, an object of the present invention is to produce an ozone generator device capable of producing large amounts of ozone whose quantity can be easily managed and checked, and without increasing the overall dimensions.

The technical features of the invention, according to the aforesaid objects, are clear from the content of the appended claims, and the advantages thereof will be apparent in the detailed description below made with reference to the accompanying figures, which schematically show a preferred but non-limiting embodiment of the device in question, wherein:
- Fig. 1 is a partially sectional schematic front view, with some parts removed for clarity, of the generator device in question;
- Fig. 2 represents an enlarged view of a detail of the device of Fig. 1;
- Fig. 3 shows a variant of the device of Fig. 1.

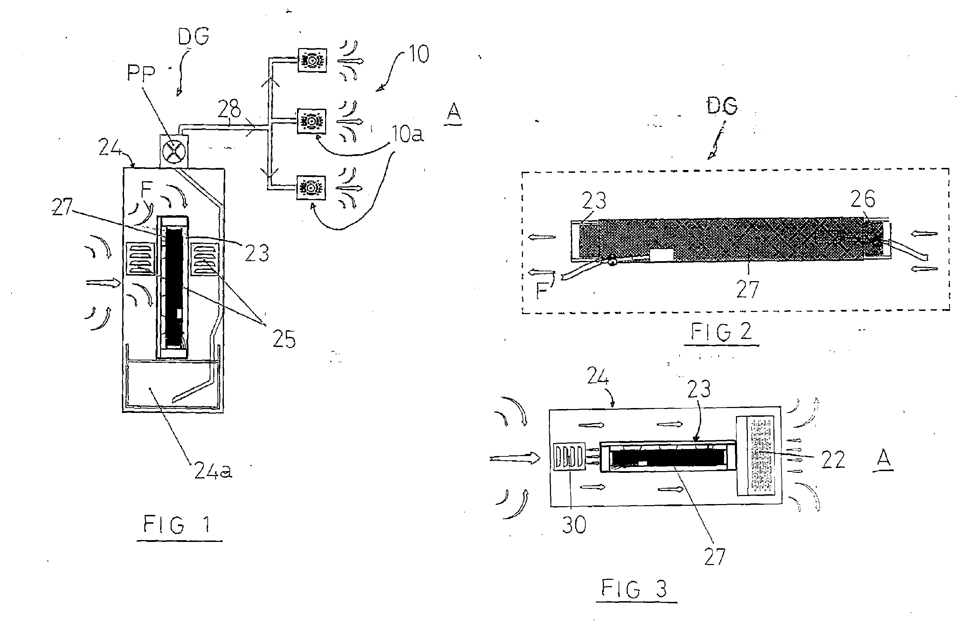

With reference to Figs. 1 and 2, DG indicates as a whole a generator device for producing ozone 03.

The device DG comprises at least one tube 23 made of dielectric material, such as glass, ceramic or an equivalent material, arranged in a specific closed container 24, inside which air coming from the outside through vents 25 is adapted to circulate (in the direction of the arrows F of Fig. 1 and Fig. 2) as air feed to generate ozone.

The tube 23 is provided with a first cylindrical mesh 26 electrically connected and arranged coaxially inside the tube 23, and with a second cylindrical mesh 27 electrically connected and arranged coaxially outside the tube 23 so as to determine a "double corona effect" (Fig. 2).

This double corona effect generates a correct and optimal quantity of ozone, for example to be used to purify the air, as a flow of air interacts with the electric field generated both inside and outside the tube 23.

This optimal quantity of ozone is then in particular advantageously fed and channelled through pressurized pump means PP without the use of compressed air as carrier element. The container 24 is also provided with a compartment 24a for ozone collection.

The device DG is also connected through channelling pipes 28 to an ozone diffuser device indicated as a whole with 10 in Fig. 1 and provided with diffusers 10a to diffuse correct and permitted quantities of ozone into the environment A and adjacent, as further service contributing to the deodorizing, hygienizing and sanitizing of the air in the environments treated. A sensor means (known and not shown) can also be provided to check that the quantity of ozone introduced with the air falls within parameters strictly permitted and established by law.

According to the variant shown in Fig. 3, the air coming from the outside through the vents 30 allows air to penetrate the container 24 and the ozone produced by the tube 23 is delivered directly into the environment A through outlet vents 22. The invention thus conceived can be subject to numerous modifications and variants, all falling within the scope of the inventive concept described; moreover, all details can be substituted by technical equivalent elements.

## Claims

1. A generator device (DG) for producing ozone, comprising at least a tube (23) made of dielectric material, inside which air coming from the outside through vents (25) is adapted to circulate, and a cylindrical mesh (26) arranged inside said tube (23) and electrically connected; the device being **characterized in that** it comprises a second cylindrical mesh (27) electrically connected and arranged coaxially and outside said tube (23).

2. The device according to claim 1, **characterized in that** said dielectric tube (23) is arranged inside a container (24) closed and provided with vent means (25) for the flow of air.

3. The device according to claim 1 or 2, **characterized in that** it also comprises pressurized feed and diffusion means (PP,10,10a) to diffuse and carry controlled quantities of said ozone.
